(19) Europäisches Patentamt
European Patent Office
Office européen des brevets

(11) **EP 1 655 581 B1**

(12) **FASCICULE DE BREVET EUROPEEN**

(45) Date de publication et mention
de la délivrance du brevet:
**30.01.2008 Bulletin 2008/05**

(51) Int Cl.:
***G01D 5/34*** *(2006.01)* ***G01D 5/22*** *(2006.01)*
***G01P 3/42*** *(2006.01)*

(21) Numéro de dépôt: **05356188.2**

(22) Date de dépôt: **20.10.2005**

(54) **Dispositif pour détecter au moins la position d'une cible mobile**

Vorrichtung zur Erfassung mindestens der Position eines beweglichen Ziels

Device for detecting the position of at least one mobile target

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.10.2004 FR 0411432**

(43) Date de publication de la demande:
**10.05.2006 Bulletin 2006/19**

(73) Titulaire: **Electricfil Automotive**
**01708 Miribel Cedex (FR)**

(72) Inventeur: **Möller, Rainer**
**69970 Chaponnay (FR)**

(74) Mandataire: **Thibault, Jean-Marc**
**Cabinet Beau de Loménie**
**51, Avenue Jean Jaurès**
**B.P. 7073**
**69301 Lyon Cédex 07 (FR)**

(56) Documents cités:
**EP-A- 1 081 390 EP-A- 1 398 602**
**US-A- 4 966 041 US-A- 5 444 370**
**US-B1- 6 452 381 US-B1- 6 586 719**

Printed by Jouve, 75001 PARIS (FR)

**Description**

La présente invention concerne le domaine technique des dispositifs adaptés pour détecter la position voire également la vitesse d'une cible mobile au sens général.

La présente invention concerne plus précisément le domaine technique des capteurs sensibles au sens et à l'intensité d'une grandeur physique pour permettre de détecter la position voire la vitesse d'une cible mobile pourvue d'au moins un motif au sens général.

L'objet de l'invention concerne plus particulièrement le domaine des capteurs magnétiques adaptés pour permettre de détecter la vitesse d'une cible mobile mais également sa position lorsque la cible mobile est en position de repos.

Dans l'état de la technique, il est connu des capteurs magnétiques du type TPOS (true power on state) aptes à fournir dès leur mise sous tension, une information correspondant à la position de la cible mobile. Un tel capteur comporte une cible mobile réalisée par exemple en un matériau magnétique doux et présentant au moins une et de manière générale une série de dents séparées par des creux. Un tel capteur comporte aussi un aimant permanent aimanté définissant un entrefer avec la cible mobile. Dans l'entrefer est disposée une sonde sensible au sens et à l'intensité d'une induction magnétique.

Le déplacement de la cible mobile provoque pour chaque passage d'une dent devant la sonde, une variation de l'induction magnétique traversant la sonde qui délivre ainsi un signal électrique fonction du sens et de l'amplitude de l'induction magnétique. Cette sonde sensible est associée notamment à un comparateur de niveaux à hystérésis dont la sortie prend un premier état logique quand le signal électrique délivré par la sonde est supérieur à un seuil prédéterminé et un deuxième état logique lorsque le signal électrique est inférieur à un seuil prédéterminé.

Ce type de capteur fournit un signal correspondant à un creux ou à une dent dès la mise sous tension du capteur sans que la cible bouge. L'inconvénient d'un tel capteur est sa sensibilité à la variation des paramètres tels que la température et l'entrefer entre la cible et le capteur. De plus, le signal délivré par de tels capteurs contient en général un décalage (offset) important, ce qui rend difficile l'exploitation du signal.

Dans l'état de la technique, il est également connu un capteur de position et/ou de vitesse mettant en oeuvre deux sondes sensibles reliées à des moyens de traitement adaptés pour exploiter de manière différentielle les signaux de sortie des sondes. Un tel capteur présente l'avantage d'éliminer l'offset du signal. De plus, un tel capteur est peu sensible aux variations d'entrefer et de température. Toutefois, un tel capteur ne peut pas fournir un signal utile dès sa mise sous tension car le signal différentiel est nul lorsque les sondes se trouvent au milieu d'une dent ou d'un creux.

Dans le même sens, le brevet US 6 452 381 décrit un capteur de position comportant une cible mobile comportant des creux et des dents et se déplaçant devant deux sondes magnétorésistives. Les signaux de sortie des sondes sont exploités de manière différentielle, de manière à gagner en sensibilité. Cependant, l'inconvénient d'un tel capteur est sa grande sensibilité à la variation d'entrefer entre la cible et les sondes.

Dans l'état de la technique, il est également connu, par le brevet US 5,444,370, un capteur de position angulaire comportant une cible mobile pourvue de deux pistes magnétiques se déplaçant chacune devant une sonde sensible à la variation d'induction magnétique. Si un tel capteur permet de fournir un signal utile sur la position de la cible dès la mise sous tension du capteur alors que la cible est immobile, un tel capteur présente l'inconvénient de nécessiter la mise en oeuvre de pistes magnétiques séparées.

L'analyse de l'état de la technique conduit à constater qu'il apparaît le besoin de disposer d'un capteur pratiquement insensible aux effets perturbateurs tels que la variation d'entrefer et de la température tout en étant apte à fournir un signal utile dès sa mise sous tension.

L'objet de la présente invention vise donc à satisfaire ce besoin en proposant un dispositif pour détecter au moins la position d'une cible mobile, conçu pour être pratiquement insensible aux variations d'entrefer et de température tout en fournissant dès la mise sous tension, une information correspondant à la position de la cible mobile.

Pour atteindre un tel objectif, l'objet de l'invention vise un dispositif pour détecter au moins la position d'une cible mobile pourvue d'au moins un motif et montée pour définir un entrefer dans lequel sont disposées au moins deux sondes sensibles à l'intensité d'une grandeur physique, le déplacement de la cible provoquant pour chaque passage d'un motif devant une sonde, une variation de l'intensité de la grandeur physique captée par la sonde qui délivre un signal électrique de sortie, fonction de l'amplitude de la grandeur physique, et appliqué à l'entrée de moyens de traitement. Selon l'invention, les moyens de traitement comportent :

- des moyens de détermination d'un premier signal dit absolu obtenu à partir d'au moins un signal de sortie,
- des moyens de détermination d'un deuxième signal dit différentiel obtenu à partir de la différence entre au moins deux signaux de sortie,
- et des moyens de comparaison entre le signal absolu et le signal différentiel délivrant un signal binaire représentatif d'au moins la position de la cible mobile.

Selon une caractéristique de l'invention, les moyens de traitement comportent des moyens pour produire une valeur de décalage adaptée pour corriger soit le signal absolu soit le signal différentiel de manière que l'un desdits signaux soit supérieur ou inférieur à l'autre lorsqu'un motif est respectivement absent ou présent dans l'entrefer.

Selon une variante de réalisation, les moyens de détermination du signal absolu utilise les signaux de sortie délivrés par les sondes afin d'en faire la somme.

Selon une autre caractéristique de l'invention, les moyens de traitement comportent des moyens d'inversion soit du signal différentiel soit du signal absolu de manière à obtenir un troisième signal dit inversé.

Conformément à une forme de réalisation, les moyens de comparaison comportent un premier moyen de comparaison entre le signal absolu et le signal différentiel (ou leurs signaux inversés) de manière à détecter un front de passage de la cible lorsque les valeurs des deux dits signaux sont égales.

Selon cette forme de réalisation, le premier moyen de comparaison délivre un état binaire déterminé lorsque le signal absolu est supérieur (ou inférieur) au signal différentiel.

Conformément à une autre forme de réalisation, les moyens de comparaison comportent un deuxième moyen de comparaison entre le signal absolu et le signal différentiel inversé (ou leurs signaux inversés) de manière à détecter un front de passage de la cible lorsque les valeurs des deux dits signaux sont égales.

Selon cette forme de réalisation, le deuxième moyen de comparaison délivre un état binaire déterminé lorsque le signal différentiel inversé est supérieur (ou inférieur) au signal absolu.

Avantageusement, le premier et deuxième moyens de comparaison sont reliés à des moyens de traitement logique délivrant un signal binaire à un état déterminé uniquement lorsque les signaux différentiel et différentiel inversé sont inférieurs (supérieurs) au signal absolu.

Par exemple, les moyens de comparaison sont des comparateurs à seuil.

A titre d'exemple, les moyens de traitement logique reliés aux moyens de comparaison sont réalisés par une porte logique « ET ».

Selon une autre caractéristique avantageuse de l'invention, les moyens de traitement comportent un filtre passe-haut en entrée duquel est appliqué le signal différentiel en vue d'éliminer ses valeurs de décalage.

Selon une variante de réalisation, le signal absolu et le signal différentiel sont déterminés en associant, à chaque signal de sortie, des coefficients de gain qui sont définis, de manière que l'amplitude du signal différentiel soit supérieure ou égale à l'amplitude du signal absolu.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique d'un dispositif de détection conforme à l'invention.

La **fig. 2** est un schéma bloc fonctionnel décrivant un exemple d'un dispositif conforme à l'invention.

La **fig. 3** est une vue de différents signaux permettant d'expliciter l'objet de l'invention.

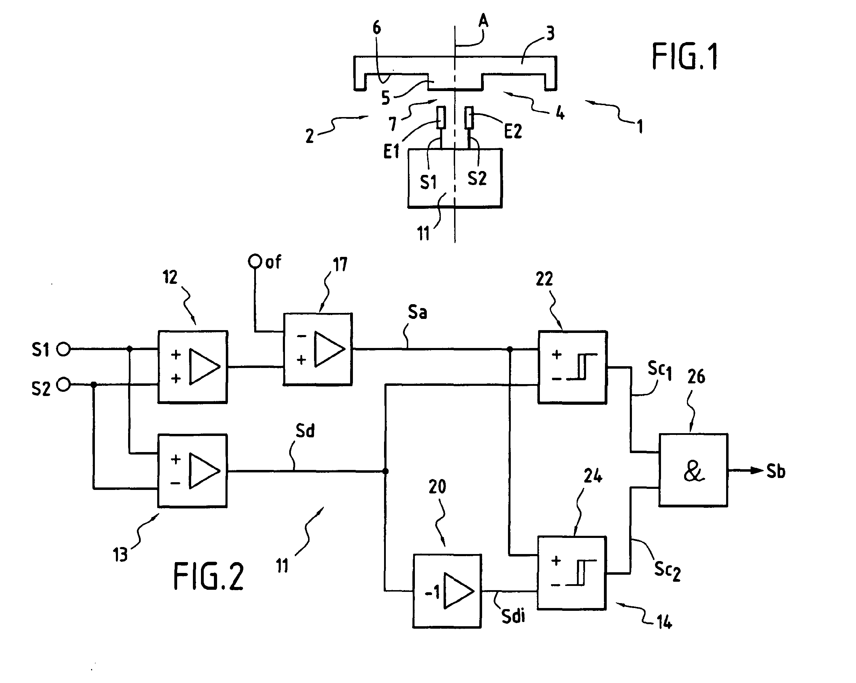

La **fig. 1** illustre un dispositif **1** adapté pour détecter la position voire également la vitesse d'un mobile se déplaçant de préférence mais non exclusivement autour d'un axe de rotation **A.** Le dispositif **1** comporte un capteur de position **2** comprenant une cible mobile **3** assujettie au mobile dont la position voire la vitesse sont à détecter. Dans l'exemple illustré, le capteur de position **2** est du type rotatif de sorte que la cible mobile **3** est de forme circulaire tournant autour de son centre. D'une manière classique, la cible mobile **3** est pourvue d'au moins un et de manière générale, d'une série de motifs **4** constitués par exemple par des dents **5** séparées entre elles par des creux **6.** Les motifs **4** s'établissent selon une piste circulaire ou périphérique ménagée sur la cible **3.**

La cible mobile **3** définit un entrefer **7** dans lequel sont disposées au moins deux, et dans l'exemple illustré, deux sondes $E_1$, $E_2$ sensibles à l'intensité d'une grandeur physique captée par la sonde. Dans l'exemple qui suit, chaque sonde $E_1$, $E_2$ est sensible à l'intensité d'une induction magnétique créée dans l'entrefer **7** par l'intermédiaire d'un aimant. Bien entendu, l'objet de l'invention peut s'appliquer à une grandeur physique différente d'un champ magnétique telle qu'un champ électrique par exemple.

Dans l'exemple illustré, le déplacement de la cible mobile **3** provoque pour chaque passage d'un motif **4** devant une sonde, une variation de l'induction magnétique traversant la sonde. Chaque sonde $E_1$, $E_2$ délivre ainsi respectivement un signal de sortie $S_1$, $S_2$ fonction de l'amplitude de l'induction magnétique. De manière classique, les signaux de sortie $S_1$, $S_2$ sont appliqués à des moyens de traitement **11** intégrés ou déportés par rapport au capteur de position **2**.

Conformément à l'invention, et tel que cela ressort plus précisément de la **fig. 2,** les moyens de traitement **11** comportent :

- des moyens **12** de détermination d'un premier signal dit absolu $S_a$ obtenu à partir d'au moins un signal de sortie $S_1$, $S_2$,
- des moyens **13** de détermination d'un deuxième signal dit différentiel $S_d$ obtenu à partir de la différence entre au moins deux signaux de sortie $S_1$, $S_2$,
- et des moyens **14** de comparaison entre le signal absolu $S_a$ et le signal différentiel $S_d$, délivrant un signal binaire $S_b$ représentatif d'au moins la position de la cible mobile **3.**

Conformément à l'invention, les moyens de traitement **11** comportent des moyens aptes à produire une valeur de décalage $O_f$ adapté pour corriger soit le signal absolu $S_a$ soit le signal différentiel $S_d$ de manière que l'un desdits signaux soit supérieur ou inférieur à l'autre lorsqu'un motif est respectivement absent ou présent dans l'entrefer **7**. Dans l'exemple illustré, la valeur de décalage $O_f$ est appliquée pour corriger le signal absolu $S_a$.

Dans l'exemple de réalisation illustrée à la **fig. 2,** les moyens de détermination **12** du signal absolu utilisent les signaux de sortie $S_1$, $S_2$ délivrée par les deux sondes $E_1$, $E_2$ afin d'en faire la somme. Selon cet exemple, les moyens **12** de détermination du signal absolu comportent un circuit sommateur analogique dont les entrées sont reliées aux sondes $E_1$, $E_2$.

Dans l'exemple illustré, le signal issu du circuit sommateur analogique **12** est appliqué à l'entrée d'un circuit soustracteur analogique **17** dont l'autre entrée reçoit la valeur de décalage $O_f$. Le circuit soustracteur analogique **17** délivre ainsi le signal absolu $S_a$ qui est obtenu à partir de la somme des deux signaux de sortie $S_1$, $S_2$, associée à la valeur de décalage $O_f$.

Dans la description qui précède, le signal absolu $S_a$ est obtenu en faisant la somme des deux signaux de sortie délivrés par les sondes. Il est à noter que le signal absolu $S_a$ peut être obtenu en utilisant l'un et/ou l'autre des signaux de sortie $S_1$, $S_2$ délivrés par les sondes, en faisant par exemple la somme pondérée des signaux. D'une manière générale, il doit être considéré que le signal absolu $S_a$ présente, pour des signaux de sortie provenant de sondes $E_i$ avec i = 1 à x, la forme générale suivante :

$$S_a = n_1.S_1 + n_2.S_2 + \dots + n_x.S_x - Of$$

avec $n_1$ à $n_x$ des coefficients de gain supérieurs ou égals à 0 avec l'un au moins de ces coefficients étant différent de zéro.

Dans l'exemple illustré, les moyens **13** de détermination du signal différentiel $S_d$ sont réalisés par un circuit soustracteur analogique sur les entrées desquelles sont appliqués les signaux de sortie $S_1$, $S_2$.

D'une manière générale, il doit être considéré que le signal différentiel $S_d$ présente, pour **x** signaux de sortie provenant de sondes $E_i$, la forme générale suivante :

$$S_d = p_1.S_1 + p_2.S_2 + \dots + p_x.S_x$$

avec $p_1$ à $p_x$ des coefficients de gain dont l'un au moins des facteurs $p_1$ à $px$ est > 0 et au moins l'un des facteurs $p_1$ à $p_x$ est < 0.

Selon une caractéristique préférée de réalisation, les coefficients de gain ou d'amplification $n_1$ à $n_x$ et $p_1$ à $p_x$ sont définis de manière que l'amplitude du signal différentiel $S_d$ soit supérieure ou égale à l'amplitude du signal absolu $S_a$.

Avantageusement, les moyens de traitement **11** comportent des moyens d'inversion **20** soit du signal différentiel $S_d$ soit du signal absolu $S_a$ de manière à obtenir un troisième signal dit inversé. Dans l'exemple illustré, les moyens d'inversion **20** inverse le signal différentiel $S_d$ de manière qu'il est obtenu un signal différentiel inversé $S_{di}$. Par exemple, ses moyens d'inversion **20** sont réalisés par un circuit analogique inverseur.

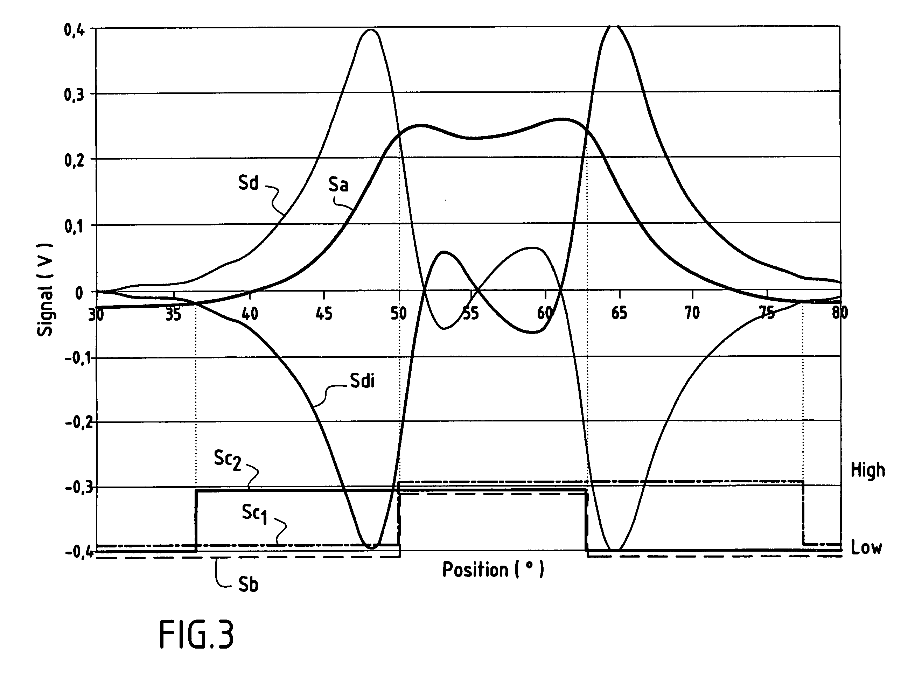

Les moyens de comparaison **14** comportent un premier moyen **22** de comparaison entre le signal absolu $S_a$ et le signal différentiel $S_d$ de manière à détecter un front de passage de la cible **3** lorsque les valeurs des signaux sont égales. Tel que cela ressort plus précisément de la **fig. 3**, le moyen de comparaison **22** délivre un signal binaire $S_{c1}$ qui occupe un état par exemple bas lorsque le signal différentiel $S_d$ est supérieur au signal absolu $S_a$ et à l'état haut lorsque le signal différentiel $S_d$ est inférieur au signal absolu $S_a$. Selon cet exemple, une telle comparaison permet de détecter le passage d'un creux à une dent de la cible **3**.

Les moyens de comparaison **14** comportent un deuxième moyen de comparaison **24** entre le signal absolu $S_a$ et le signal différentiel inversé $S_{di}$ de manière à détecter un front de passage de la cible lorsque les valeurs des signaux sont égales. Le moyen de comparaison **24** délivre un signal binaire $S_{c2}$ qui occupe un état par exemple bas lorsque le signal différentiel inversé $S_{di}$ est supérieur au signal absolu $S_a$ et à l'état haut lorsque le signal différentiel inversé $S_{di}$ est inférieur au signal absolu $S_a$. Selon cet exemple, une telle comparaison permet de détecter le passage d'une dent à un creux de la cible 3. Les moyens de comparaison **22, 24** sont des comparateurs à au moins un seuil.

Les premier et deuxième moyens de comparaison **22, 24** sont reliés à des moyens de traitement logique **26** délivrant un signal binaire $S_b$ à un état déterminé uniquement lorsque les signaux différentiel $S_d$ et différentiel inversé $S_{di}$ sont inférieurs au signal absolu $S_a$. Les moyens de traitement logique 26 sont constitués par exemple par une porte logique « ET » qui fournit un signal de sortie $S_b$ à un état logique par exemple haut uniquement lorsque les signaux $S_{c1}$, $S_{c2}$ sont simultanément à l'état haut. Dans ce cas, une dent **5** est placée en face des sondes. Cette relation est vérifiée même lorsque le signal différentiel $S_d$ est égal à zéro correspondant à la position d'une dent 5 ou d'un creux **6** au milieu d'une sonde. Pour ce faire, le signal de décalage $O_f$ a été choisi de manière à fournir un signal positif en face d'une dent **5** et négatif en face d'un creux **6.** Le capteur **2** fournit ainsi un signal au démarrage c'est-à-dire avec la cible mobile à l'arrêt sans qu'un changement du mode de fonctionnement soit nécessaire.

Dans l'exemple décrit, le premier moyen de comparaison **22** compare le signal absolu $S_a$ et le signal différentiel $S_d$ alors que le deuxième moyen de comparaison **24** compare le signal absolu $S_a$ et le signal différentiel inversé $S_{di}$. Bien entendu, il peut être prévu que le deuxième moyen de comparaison **24** compare le signal absolu inversé et le signal différentiel $S_d$.

Dans le même sens, dans la mesure où le signal binaire $S_b$ est à l'état haut, si $S_a > S_d$ et $S_a > S_{di}$, il peut être envisagé différentes formules pour déterminer les signaux $S_a$, $S_d$, $S_{di}$. Par exemple, il peut être envisagé de réaliser les fonctions de traitement suivantes :

$$(n_1.S_1 + n_2.S_2 \ldots + n_x.S_x - Of) > (p_1.S_1 + p_2.S_2 \ldots + p_x.S_x)$$

$$et\ (n_1.S_1 + n_2.S_2 \ldots + n_x.S_x - Of) > -(p_1.S_1 + p_2.S_2 \ldots + p_x.S_x)$$

ou :

$$(n_1.S_1 + n_2.S_2 \ldots + n_x.S_x - Of) - (p_1.S_1 + p_2.S_2 \ldots + p_x.S_x) > 0$$

$$et\ (n_1.S_1 + n_2.S_2 \ldots + n_x.S_x - Of) + (p_1.S_1 + p_2.S_2 \ldots + p_x.S_x) > 0$$

ou :

$$(n_1.S_1 + n_2.S_2 \ldots + n_x.S_x - Of) > \left| p_1.S_1 + p_2.S_2 \ldots + p_x.S_x \right|$$

Selon ce dernier exemple, il est à noter que le signal absolu peut être comparé à un signal différentiel redressé.

Selon une autre caractéristique avantageuse de l'invention, les moyens de traitement **11** comportent un filtre passe-haut en entrée duquel est appliqué le signal différentiel $S_d$ en vue d'éliminer ses valeurs de décalage ou offset. Le signal différentiel $S_d$ est alors égal à une valeur nulle quand la vitesse de la cible **3** est inférieure à la bande passante du filtre. Dans ce cas, le capteur fonctionne en mode TPOS. Si la vitesse augmente, le capteur passe progressivement du mode TPOS en mode différentiel au fur et à mesure que le signal différentiel $S_d$ augmente.

L'invention n'est pas limitée aux exemples décrits et représentés car diverses modifications peuvent y être apportées sans sortir de son cadre.

## Revendications

**1.** Dispositif pour détecter au moins la position d'une cible mobile **(3)** pourvue d'au moins un motif **(4)** et montée pour définir un entrefer **(7)** dans lequel sont disposées au moins deux sondes **($E_1$, $E_2$)** sensibles à l'intensité d'une grandeur physique, le déplacement de la cible **(3)** provoquant pour chaque passage d'un motif devant une sonde, une variation de l'intensité de la grandeur physique captée par la sonde qui délivre un signal électrique de sortie fonction de l'amplitude de la grandeur physique et appliqué à l'entrée de moyens de traitement **(11)**, comportant

- des moyens **(13)** de détermination d'un signal dit différentiel **($S_d$)** obtenu à partir de la différence entre aux moins deux signaux de sortie **($S_1$, $S_2$)**,

**caractérisé en ce que** les moyens de traitement (11) comportent :

- des moyens **(12)** de détermination d'un premier signal **($S_a$)** dit absolu obtenu à partir d'au moins un signal de sortie **($S_1$, $S_2$)**,
- et des moyens **(14)** de comparaison entre le signal absolu **($S_a$)** et le signal différentiel **($S_d$)** délivrant un signal binaire **($S_b$)** représentatif d'au moins la position de la cible mobile.

**2.** Dispositif selon la revendication 1, **caractérisé en ce que** les moyens de traitement **(11)** comportent des moyens pour produire une valeur de décalage **($O_f$)** adaptée pour corriger soit le signal absolu **($S_a$)** soit le signal différentiel

**(S_d)** de manière que l'un desdits signaux soit supérieur ou inférieur à l'autre lorsqu'un motif est respectivement absent ou présent dans l'entrefer.

3. Dispositif selon la revendication 1, **caractérisé en ce que** les moyens de détermination **(12)** du signal absolu **(S_a)** utilise les signaux de sortie **(S_1, S_2)** délivrés par les sondes **(E_1, E_2)** afin d'en faire la somme.

4. Dispositif selon la revendication 1 ou 2, **caractérisé en ce que** les moyens de traitement **(11)** comportent des moyens d'inversion **(20)** soit du signal différentiel **(S_d)** soit du signal absolu **(S_a)** de manière à obtenir un troisième signal dit inversé.

5. Dispositif selon les revendications 1 et 4, **caractérisé en ce que** les moyens de comparaison **(14)** comportent un premier moyen de comparaison **(22)** entre le signal absolu **(S_a)** et le signal différentiel **(S_d)** (ou leurs signaux inversés) de manière à détecter un front de passage de la cible **(3)** lorsque les valeurs des deux dits signaux sont égales.

6. Dispositif selon la revendication 5, **caractérisé en ce que** le premier moyen de comparaison **(22)** délivre un état binaire déterminé lorsque le signal absolu **(S_a)** est supérieur (ou inférieur) au signal différentiel **(S_1).**

7. Dispositif selon l'une des revendications 1 à 5, **caractérisé en ce que** les moyens de comparaison **(14)** comportent un deuxième moyen de comparaison **(24)** entre le signal absolu **(S_a)** et le signal différentiel inversé **(S_{di})** (ou leurs signaux inversés) de manière à détecter un front de passage de la cible **(3)** lorsque les valeurs des deux dits signaux sont égales.

8. Dispositif selon la revendication 7, **caractérisé en ce que** le deuxième moyen de comparaison **(24)** délivre un état binaire déterminé lorsque le signal différentiel inversé (S_{di}) est supérieur (ou inférieur) au signal absolu **(S_a).**

9. Dispositif selon les revendications 6 et 7, **caractérisé en ce que** le premier et deuxième moyens de comparaison **(22, 24)** sont reliés à des moyens de traitement logique **(26)** délivrant un signal binaire **(S_b)** à un état déterminé uniquement lorsque les signaux différentiel **(S_d)** et différentiel inversé **(S_{di})** sont inférieurs (supérieurs) au signal absolu.

10. Dispositif selon les revendications 6, 8 ou 9, **caractérisé en ce que** les moyens de comparaison **(22, 24)** sont des comparateurs à seuil.

11. Dispositif selon la revendication 9, **caractérisé en ce que** les moyens de traitement logique **(26)** reliés aux moyens de comparaison **(22, 24)** sont réalisés par une porte logique « ET ».

12. Dispositif selon la revendication 1, **caractérisé en ce que** les moyens de traitement **(11)** comportent un filtre passe-haut en entrée duquel est appliqué le signal différentiel en vue d'éliminer ses valeurs de décalage.

13. Dispositif selon les revendications 1 et 3, **caractérisé en ce que** le signal absolu **(S_a)** et le signal différentiel **(S_d)** sont déterminés en associant, à chaque signal de sortie, des coefficients de gain qui sont définis, de manière que l'amplitude du signal différentiel **(S_d)** soit supérieure ou égale à l'amplitude du signal absolu **(S_a).**

**Claims**

1. - A device to detect at least the position of a mobile target (3) equipped with at least one pattern (4) and mounted so as to define a magnetic gap (7) in which are placed at least two probes (E_1, E_2) that are sensitive to the intensity of a physical magnitude where, for each passage of a pattern in front of a probe, the movement of the target (3) causes a variation in the intensity of the physical magnitude detected by the probe, which delivers an electrical output signal that is a function of the amplitude of the physical magnitude, and that is applied to the input of processing resources (11), including resources (13) for the determination of a signal, known as a differential signal (S_d), obtained from the difference between at least two output signals (S_1, S_2),
**characterised in that** the processing resources (11) include:

   - resources (12) for the determination of a signal (S_a) known as the absolute signal, obtained from at least one output signal (S_1, S_2), and
   - resources (14) for comparison between the absolute signal (S_a) and the differential signal (S_d), delivering a binary signal ($S_b$) representing at least the position of the mobile target.

2. - A device according to claim 1, **characterised in that** the processing resources (11) include resources to produce an offset value ($O_f$) that is adapted in order to correct either the absolute signal ($S_a$) or the differential signal ($S_d$), so that one of the said signals is greater or less than the other when a pattern is respectively absent or present in the magnetic gap.

3. - A device according to claim 1, **characterised in that** the resources for determination (12) of the absolute signal ($S_a$) uses the output signals ($S_1$, $S_2$) delivered by the probes ($E_1$, $E_2$) in order to produce their sum.

4. - A device according to claim 1 or 2, **characterised in that** the processing resources (11) include resources for the inversion (20) either of the differential signal ($S_d$) or of the absolute signal ($S_a$) so as to obtain a third signal called the inverse signal.

5. - A device according to claims 1 and 4, **characterised in that** the comparison resources (14) include a first resource (22) for comparison between the absolute signal ($S_a$) and the differential signal ($S_d$) (or their inverse signals) so as to detect a passing edge of the target (3) when the values of the said two signals are equal.

6. - A device according to claim 5, **characterised in that** the first comparison resource (22) delivers a binary state that is determined when the absolute signal ($S_a$) is greater (or less) than the differential signal ($S_d$).

7. - A device according to one of claims 1 to 5, **characterised in that** the comparison resources (14) include a second comparison resource (24) between the absolute signal ($S_a$) and the inverse differential signal ($S_{di}$) (or their inverse signals) so as to detect a passing edge of the target (3) when the values of the said two signals are equal.

8. - A device according to claim 7, **characterised in that** the second comparison resource (24) delivers a binary state that is determined when the inverse differential signal ($S_{di}$) is greater (or less) than the absolute signal ($S_a$).

9. - A device according to claims 6 and 7, **characterised in that** the first and second comparison resources (22, 24) are connected to logical processing resources (26) delivering a binary signal ($S_b$) at a state which is determined only when the differential ($S_d$) and inverse differential ($S_{di}$) signals are less (or greater) than the absolute signal.

10. - A device according to claims 6, 8 or 9, **characterised in that** the comparison resources (22, 24) are threshold comparators.

11. - A device according to claim 9, **characterised in that** the logical processing resources (26) connected to the comparison resources (22, 24) take the form of a logical AND gate.

12. - A device according to claim 1, **characterised in that** the processing resources (11) include a high-pass filter, to the input of which is applied the differential signal with a view to eliminating its offset values.

13. - A device according to claims 1 and 3, **characterised in that** the absolute signal ($S_a$) and the differential signal ($S_d$) are determined by assigning to each output signal, gain coefficients which are specified so that the amplitude of the differential signal ($S_d$) is equal to or greater than the amplitude of the absolute signal ($S_a$).

**Patentansprüche**

1. Vorrichtung zur Erfassung wenigstens der Position eines beweglichen Ziels (3), das mit wenigstens einem Motiv (4) versehen und angebracht ist, um einen Luftspalt (7) zu definieren, in dem wenigstens zwei gegenüber der Intensität einer physikalischen Größe empfindliche Fühler ($E_1$, $E_2$) angeordnet sind, wobei die Bewegung des Ziels (3) für jedes Vorbeilaufen eines Motivs an einem Fühler eine Änderung der Intensität der physikalischen Größe bewirkt, die durch den Fühler erfaßt wird, der ein elektrisches Ausgangssignal liefert, das eine Funktion der Amplitude der physikalischen Größe ist und an den Eingang von Verarbeitungsmitteln (11) angelegt wird, die Mittel (13) zur Bestimmung eines sogenannten Differentialsignals ($S_d$), das aus der Differenz zwischen wenigstens zwei Ausgangssignalen ($S_1$, $S_2$) erhalten wird, umfassen, **dadurch gekennzeichnet, daß** die Verarbeitungsmittel (11) folgendes umfassen:

- Mittel (12) zur Bestimmung eines sogenannten absoluten Signals ($S_a$), das aus wenigstens einem Ausgangssignal ($S_1$, $S_2$) erhalten wird,

- sowie Mittel (14) zum Vergleichen des absoluten Signals ($S_a$) mit dem Differentialsignal ($S_d$), die ein für wenigstens die Position des beweglichen Ziels repräsentatives Binärsignal ($S_b$) liefern.

2. Vorrichtung nach Anspruch 1, **dadurch gekennzeichnet, daß** die Verarbeitungsmittel (11) Mittel umfassen, um einen geeigneten Offsetwert ($O_f$) zu erzeugen, um entweder das absolute Signal ($S_a$) oder das Differentialsignal ($S_d$) so zu korrigieren, daß eines der genannten Signale größer oder kleiner als das andere ist, wenn ein Motiv in dem Luftspalt nicht vorhanden ist bzw. vorhanden ist.

3. Vorrichtung nach Anspruch 1, **dadurch gekennzeichnet, daß** die Mittel (12) zur Bestimmung des absoluten Signals ($S_a$) die durch die Fühler ($E_1$, $E_2$) gelieferten Ausgangssignale ($S_1$, $S_2$) verwenden, um daraus die Summe zu bilden.

4. Vorrichtung nach Anspruch 1 oder 2, **dadurch gekennzeichnet, daß** die Verarbeitungsmittel (11) Mittel (20) zur Umkehr entweder des Differentialsignals ($S_d$) oder des absoluten Signals ($S_a$) umfassen, so daß ein drittes, sogenanntes umgekehrtes Signal erhalten wird.

5. Vorrichtung nach Anspruch 1 und 4, **dadurch gekennzeichnet, daß** die Vergleichsmittel (14) ein erstes Mittel (22) zum Vergleichen des absoluten Signals ($S_a$) mit dem Differentialsignal ($S_d$) (oder ihrer umgekehrten Signale) umfassen, um eine Durchgangsfront des Ziels (3) zu erfassen, wenn die Werte der zwei genannten Signale gleich sind.

6. Vorrichtung nach Anspruch 5, **dadurch gekennzeichnet, daß** das erste Vergleichsmittel (22) einen bestimmten Binärzustand liefert, wenn das absolute Signal ($S_a$) größer (oder kleiner) als das Differentialsignal ($S_d$) ist.

7. Vorrichtung nach einem der Ansprüche 1 bis 5, **dadurch gekennzeichnet, daß** die Vergleichsmittel (14) ein zweites Mittel (24) zum Vergleichen des absoluten Signals ($S_a$) mit dem umgekehrten Differentialsignal ($S_{di}$) (oder ihrer umgekehrten Signale) umfassen, um eine Durchgangsfront des Ziels (3) zu erfassen, wenn die Werte der zwei genannten Signale gleich sind.

8. Vorrichtung nach Anspruch 7, **dadurch gekennzeichnet, daß** das zweite Vergleichsmittel (24) einen bestimmten Binärzustand liefert, wenn das umgekehrte Differentialsignal ($S_{di}$) größer (oder kleiner) als das absolute Signal ($S_a$) ist.

9. Vorrichtung nach den Ansprüchen 6 und 7, **dadurch gekennzeichnet, daß** das erste und das zweite Vergleichsmittel (22, 24) mit logischen Verarbeitungsmitteln (26) verbunden sind, die ein Binärsignal ($S_b$) in einem bestimmten Zustand lediglich dann liefern, wenn das Differentialsignal ($S_d$) und das umgekehrte Differentialsignal ($S_{di}$) kleiner (oder größer) als das absolute Signal sind.

10. Vorrichtung nach den Ansprüchen 6, 8 oder 9, **dadurch gekennzeichnet, daß** die Vergleichsmittel (22, 24) Schwellenkomparatoren sind.

11. Vorrichtung nach Anspruch 9, **dadurch gekennzeichnet, daß** die mit den Vergleichsmitteln (22, 24) verbundenen logischen Verarbeitungsmittel (26) mittels eines logischen "UND"-Glieds realisiert sind.

12. Vorrichtung nach Anspruch 1 , **dadurch gekennzeichnet, daß** die Verarbeitungsmittel (11) einen Hochpaßfilter umfassen, an dessen Eingang das Differentialsignal angelegt wird, um dessen Offsetwerte zu beseitigen.

13. Vorrichtung nach den Ansprüchen 1 und 3, **dadurch gekennzeichnet, daß** das absolute Signal ($S_a$) und das Differentialsignal ($S_d$) **dadurch** bestimmt werden, daß jedem Ausgangssignal Verstärkungsfaktoren zugeordnet werden, die derart definiert sind, daß die Amplitude des Differentialsignals ($S_d$) größer als die oder gleich der Amplitude des absoluten Signals ($S_a$) ist.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6452381 B
- US 5444370 A